# NEUE EUROPÄISCHE PATENTSCHRIFT

(11) **EP 3 443 239 B2**
(45) Veröffentlichungstag und Bekanntmachung des Hinweises auf die Entscheidung über den Einspruch: **03.04.2024**
(45) Hinweis auf die Patenterteilung: 06.01.2021
(21) Anmeldenummer: 17718019.7
(22) Anmeldetag: 04.04.2017
(51) Int. Cl.: F16D 65/097, F16D 55/226

(54) **SCHEIBENBREMSE, INSBESONDERE FÜR NUTZFAHRZEUGE**
DISC BRAKE, IN PARTICULAR FOR UTILITY VEHICLES
FREIN À DISQUE, NOTAMMENT POUR VÉHICULES UTILITAIRES

(30) Priorität: 13.04.2016 DE 102016004516
(43) Veröffentlichungstag der Anmeldung: 20.02.2019
(73) Patentinhaber: ZF CV Systems Europe BV, 1170 Brussels (BE)
(72) Erfinder: BEYER, Frank, 68239 Mannheim (DE); FRANK, Jochen, 67071 Ludwigshafen (DE); JUNGMANN, Hans-Christian, 69517 Gorxheimertal (DE); KALMBACH, Marcel, 74360 IIsfeld (DE); KELLER, Marcus, 69469 Weinheim (DE); MOSER, Peter, 74915 Waibstadt (DE); MÜLLER, Martin, 68165 Mannheim (DE); SCHERER, Vitalji, 69181 Leimen (DE); SEIP, Mirko, 69434 Brombach (DE); STAFFLINGER, Markus, 64625 Bensheim (DE)
(74) Vertreter: Eisenführ Speiser
(86) Internationale Anmeldenummer: PCT/EP2017/000412
(87) Internationale Veröffentlichungsnummer: WO 2017/178096

(56) Entgegenhaltungen:
- EP-B1- 3 308 047
- WO-A1-2016/202778
- DE-A1- 4 119 928
- DE-A1- 4 304 616
- DE-A1- 4 430 956
- DE-A1- 4 430 956
- DE-A1-102015 109 540
- US-A- 4 382 491
- US-A1- 2002 043 436
- US-A1- 2004 256 183
- US-A1- 2004 256 183
- US-A1- 2016 003 315
- US-A1- 2016 003 315

## Beschreibung

Die Erfindung betrifft eine Scheibenbremse, insbesondere für Nutzfahrzeuge, mit einer Bremsscheibe, einem ersten Bremsbelag auf einer ersten Seite der Bremsscheibe und einem zweiten Bremsbelag auf einer der ersten Seite gegenüberliegenden zweiten Seite der Bremsscheibe. Dabei handelt es sich bevorzugt um eine Gleitsattelscheibenbremse.

Scheibenbremsen der oben genannten Art sind bekannt. Im Betrieb stellt sich häufig das Problem, dass sich nach Bremsentlastung die beiden Bremsbeläge nicht ausreichend weit von der Bremsscheibe entfernen. Mit anderen Worten stellt sich das sogenannte Lüftspiel nicht ein. Vielmehr kommt es vor, dass einer der beiden Bremsbeläge oder beide Bremsbeläge schleifend an der Bremsscheibe anliegen.

Es sind bereits Versuche unternommen worden, das obige Problem zu beheben. Dazu ist beispielsweise bei einer Gleitsattelscheibenbremse der erste (reaktionsseitige) Bremsbelag mittels eines Magneten oder einer Zugfeder in Axialrichtung mit dem Bremssattel gekoppelt worden. Ein Beispiel ist in der DE 10 2012 102 585 B4 beschrieben. Auch sind Lösungen bekannt, wo der zweite (zuspannseitige) Bremsbelag mittels eines Magneten oder einer Zugfeder axial an die Zuspanneinrichtung der Bremse gekoppelt worden ist. Diese Lösungen funktionieren aber nur dann und insoweit, als der Sattel bzw. die Zuspanneinrichtung bei Bremsentlastung zurückgestellt wird. Denn nur dann wird der jeweilige Bremsbelag auch ausreichend weit von der Bremsscheibe abgehoben.

Die US 201/0003315 A1 offenbart eine Scheibenbremse für Fahrzeuge mit einer Spreizeinrichtung, wobei die Spreizeinrichtung, in Bezug auf die Bremsbeläge, radial an einem Niederhaltebügel gehalten ist und die Spreizeinrichtung sich axial an der Belagrückenplatte des zuspannseitigen Bremsbelags und axial an der Belagrückenplatte des reaktionsseitigen Bremsbelags abstützt. Die Spreizeinrichtung ist dazu ausgelegt eine Kippbewegung der Bremsbeläge, ausgelöst durch die axiale Kraft der Niederhaltefeder, während eines Zustellvorgangs zu verhindern und somit einen gleichmäßigen Verschleiß der Bremsbeläge zu gewährleisten.

Angesichts der obigen Probleme liegt der Erfindung die Aufgabe zugrunde, die Scheibenbremse der eingangs genannten Art derart weiterzubilden, dass mindestens einer der beiden Bremsbeläge bei Bremsentlastung ausreichend weit von der Bremsscheibe abgehoben wird, dass ein Restschleifmoment zumindest reduziert, wenn nicht eliminiert wird.

Erfindungsgemäß wird die gestellte Aufgabe bei einer Scheibenbremse der eingangs genannten Art durch eine Spreizeinrichtung gemäß Anspruch 1 gelöst.

Dabei liegt der Erfindung die Erkenntnis zugrunde, dass eine Spreizung der beiden Bremsbeläge dazu führt, dass sich in der Regel beide Bremsbeläge von der Bremsscheibe abheben, so dass kein Restschleifen mehr auftritt. Die Spreizeinrichtung stützt sich an einer Niederhaltefeder des ersten und des zweiten Bremsbelags ab. Dabei wirkt eine Spreizung einer dem Abheben der Bremsbeläge entgegenstehenden Haftreibung entgegen. Äußere Einflüsse, wie etwa Stöße und Vibrationen, unterstützen den Spreizeffekt und führen zum Zentrieren der Bremsbeläge. Weil die Spreizkraft auf beiden Seiten der Bremsscheibe wirkt, stellt sich auf beiden Seiten ein gleichgroßes Lüftspiel ein. Doch selbst wenn nur einer der beiden Bremsbeläge sich von der Bremsscheibe abhebt, ist das Restschleifen zumindest verringert.

Bei dieser Art der Abstützung ist eine verlässliche Spreizung gewährleistet, ohne dass der Bremsvorgang selbst beeinträchtigt würde.

Die Spreizeinrichtung ist erfindungsgemäß bevorzugt elastisch. Mit anderen Worten wird eine elastische Rückstellkraft zum Spreizen der beiden Bremsbeläge ausgenutzt.

Dabei kann die Spreizeinrichtung nach einer weiter bevorzugten Ausführungsform der Erfindung einen Federdraht aufweisen. Diese Lösung ist mechanisch besonders einfach und robust.

Die Spreizeinrichtung weist zwei Schraubenfedern auf. Eine solche Schraubenfeder kann die oben erwähnte elastische Rückstellkraft bei Belastung beispielsweise im Sinne einer axialen Stauchung erzeugen.

Nach einer weiter bevorzugten Ausführungsform der Erfindung ist vorgesehen, dass die Spreizeinrichtung an einer Niederhalteeinrichtung des ersten und des zweiten Bremsbelags gehalten ist.

Eine aus der Halterung resultierende Axialkopplung der Spreizeinrichtung mit der Niederhalteeinrichtung, auch wenn sie nur auf einem Reibschluss beruht, kann dazu beitragen, dass sich infolge der Spreizung nicht nur einer der beiden Bremsbeläge von der Bremsscheibe abhebt, sondern dass beide Bremsbeläge von der Bremsscheibe weg bewegt werden, so dass das Restschleifen eliminiert ist. Darüber hinaus besteht die Möglichkeit, die Bremsbeläge auf den unterschiedlichen Seiten mit zueinander unterschiedlichen Spreizkräften zu spreizen.

In exemplarischen, nicht patentgemäßen Ausführungsbeispielen ist vorgesehen, dass die von der Spreizeinrichtung erzeugte Kraft einstellbar ist.

Dadurch kann dem jeweiligen Betriebsbedingungen sachgemäß Rechnung getragen werden. Die Einstellbarkeit kann beispielsweise durch entsprechende Ausgestaltung der Halterung an der Niederhalteeinrichtung verwirklicht sein.

Im Folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine perspektivische Ansicht einer Gleitsattelscheibenbremse nach einem ersten Ausführungsbeispiel der Erfindung,
- Figur 2: eine Seitenansicht der Bremse nach Figur 1,
- Figur 3: eine Detailansicht aus Figur 2,
- Figur 4: die gleiche Ansicht wie Figur 3, jedoch von einem zweiten, nicht patentgemäßen Ausführungsbeispiel,
- Figur 5: eine perspektivische Ansicht einer Gleitsattelscheibenbremse nach einem exemplarischen dritten Ausführungsbeispiel,
- Figur 6: eine Seitenansicht der Bremse nach Figur 5,
- Figur 7: eine perspektivische Ansicht einer Gleitsattelscheibenbremse nach einem exemplarischen vierten Ausführungsbeispiel,
- Figur 8: eine Draufsicht auf die Bremse nach Figur 7,
- Figur 9: eine perspektivische Ansicht einer Gleitsattelscheibenbremse nach einem exemplarischen fünften Ausführungsbeispiel,
- Figur 10: eine Draufsicht auf die Bremse nach Figur 9

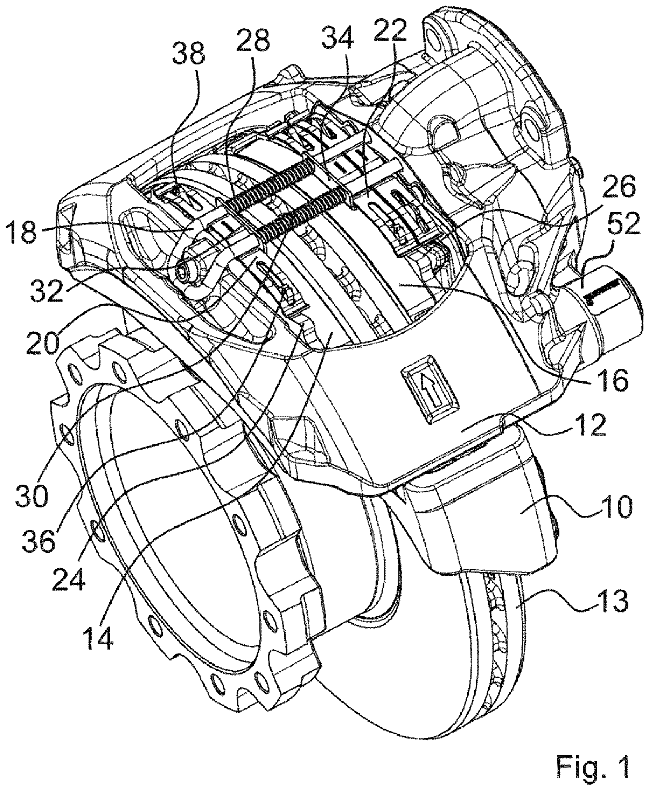

Zu der Bremse nach den Figuren 1 bis 3 gehören ein Bremsenträger 10, ein schwimmend gelagerter Bremssattel 12, ein auf einer ersten Seite einer Bremsscheibe 13 angeordneter erster Bremsbelag 14 und ein auf einer zweiten Seite der Bremsscheibe 13 angeordneter zweiter Bremsbelag 16. Bei der ersten Seite handelt es sich um die sogenannte Reaktionsseite, bei der zweiten Seite um die Zuspannseite.

Der erste und der zweite Bremsbelag 14, 16 werden mittels eines Niederhaltebügels 18 über Niederhaltefedern 20, 22 niedergehalten. Dabei liegen die Niederhaltefedern 20, 22 an Rückenplatten 24, 26 des ersten bzw. des zweiten Bremsbelags 14, 16 an.

Bei der Bremse nach den Figuren 1 bis 3 ist eine Spreizeinrichtung vorgesehen, zu der zwei Federn 28, 30 gehören, die sich an zwei Blechen 32, 34 abstützen. Die Federn 28, 30 sind Schraubenfedern, die auf Druck beansprucht werden. Die Bleche 32, 34 sind L-förmig ausgeführt.

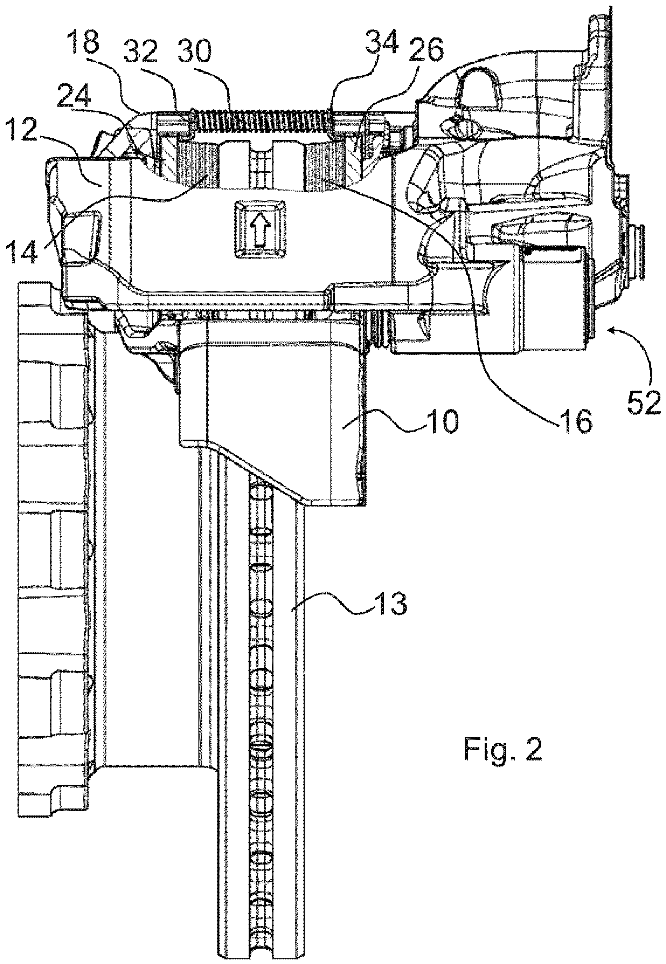

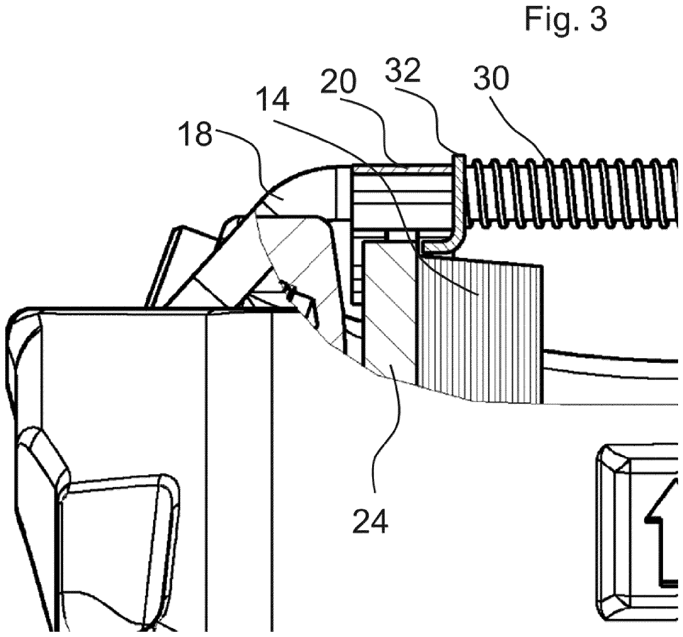

Figur 3 zeigt den in Figur 2 links gelegenen Teil der Spreizeinrichtung. Die Feder 30 drückt zur Spreizung gegen das Blech 32, das seinerseits an der Niederhaltefeder 20 anliegt. Die Niederhaltefeder 20 ist ihrerseits axial mit dem ersten Bremsbelag 14 über Ansätze 36, 38 gekoppelt, weshalb die Rückstellkraft der Federn 28, 30 axial auf den ersten Bremsbelag 14 wirkt. Die Ausgestaltung der Spreizeinrichtung ist auf der in Figur 2 rechts liegenden Seite symmetrisch zu der linken Seite ausgeführt, so dass auch auf den zweiten Bremsbelag 16 die Rückstellkraft der Federn 28 und 30 wirkt. Diese Rückstellkraft bewirkt, dass der erste Bremsbelag 14 und der zweite Bremsbelag 16 voneinander weg bewegt werden, wodurch sie von der Bremsscheibe abheben. Insbesondere dann, wenn die in der Zeichnung nicht dargestellte Zuspanneinrichtung der Bremse eine Rückstelleinrichtung aufweist, wird bei Bremsentlastung die Zuspanneinrichtung zurückgestellt, wodurch Raum für das Abheben des zuspannseitigen zweiten Bremsbelags 16 geschaffen wird. Im Zusammenspiel mit der Spreizeinrichtung wird auch der erste Bremsbelag 14 abheben, wodurch jedes Restschleifen sowohl des ersten als auch des zweiten Bremsbelags 14, 16 an der Bremsscheibe zuverlässig eliminiert ist.

In den Zeichnungen 4 bis 10 bezeichnen gleiche Referenznummern gleiche Bauteile wie in den Figuren 1 bis 3.

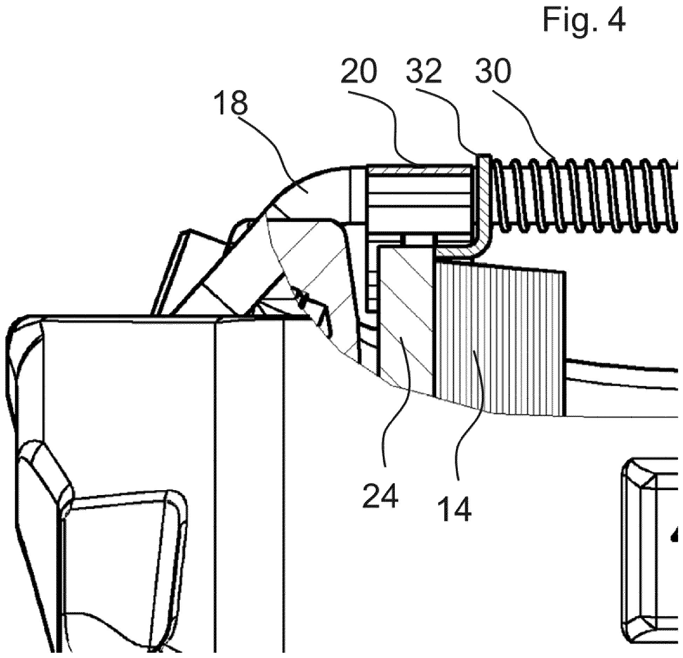

Figur 4 zeigt die gleiche Einzelheit wie Figur 3, jedoch von einem exemplarischen zweiten Ausführungsbeispiel. Danach stützt sich das Blech 32 nicht etwa an der Niederhaltefeder 20 ab, sondern vielmehr an der Rückenplatte 24. Wiederum gilt, dass die Spreizeinrichtung symmetrisch ausgelegt ist, weshalb sich auch das Blech 34 an der Rückenplatte 26 abstützt.

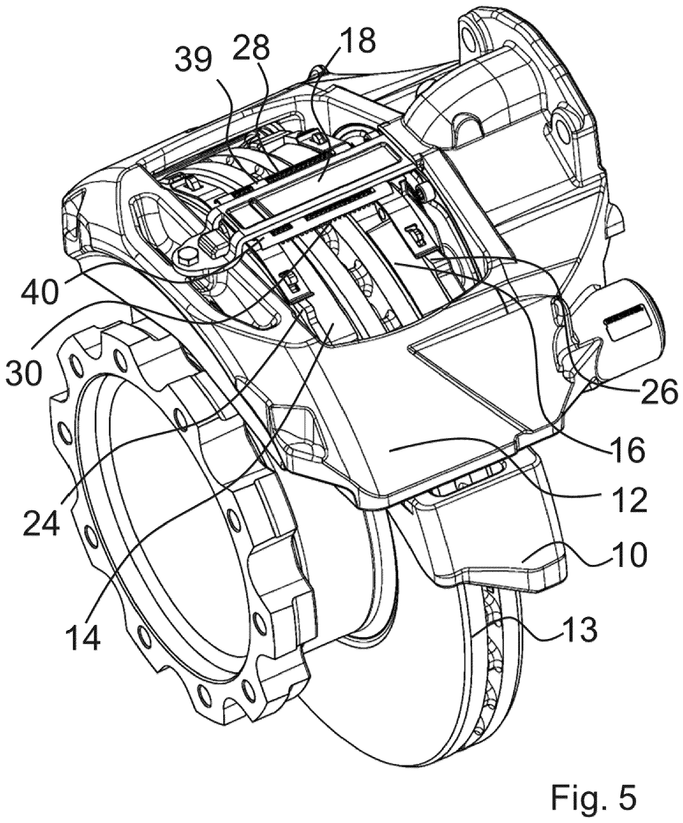

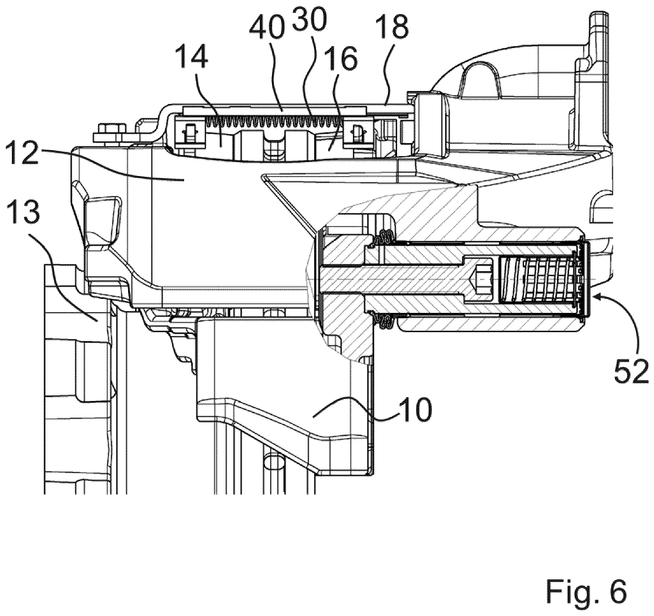

Das in den Figuren 5 und 6 gezeigte dritte exemplarische Ausführungsbeispiel entspricht im Wesentlichen den Ausführungsbeispielen nach den Figuren 1 bis 4, wobei jedoch die Federn 28, 30 nicht wie nach den Figuren 1 bis 4 den Niederhaltebügel 18 bzw. jeweils eine Speiche des Niederhaltebügels 18 umschlingen, sondern vielmehr neben dem Niederhaltebügel angeordnet sind. Sie sind mit Halterungen 39, 40 an dem Niederhaltebügel 18 gehalten. Die Halterungen 39, 40 können zwar zweiteilig ausgeführt sein, bevorzugt sind sie aber einteilig. Die dadurch entstehende Halterung muss nicht zwingend am Niederhaltebügel 18 befestigt sein. Vielmehr ist eine anderweitige Befestigung auch möglich. Die Federn 28, 30 können sowohl direkt als auch indirekt auf die Niederhaltefedern 20, 22 und/oder die Rückenplatten 24, 26 drücken. Dies gilt auch für die Ausführungsbeispiele nach den Figuren 1 bis 4.

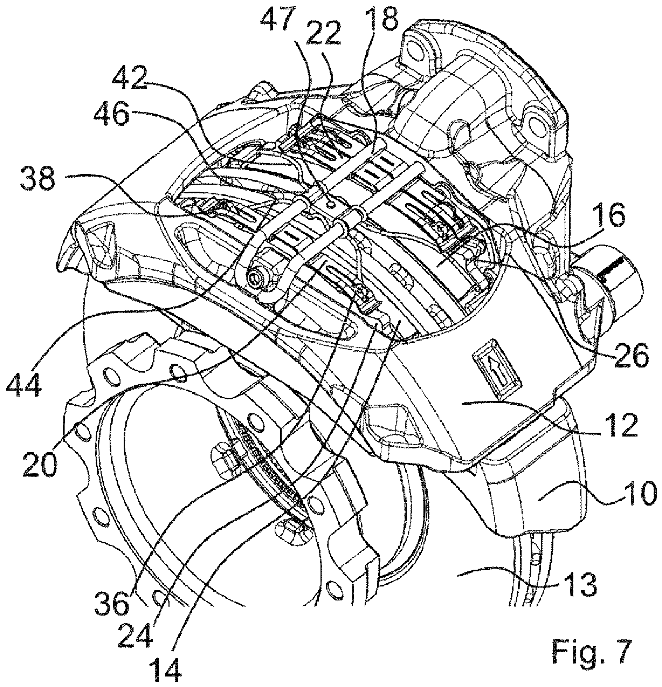

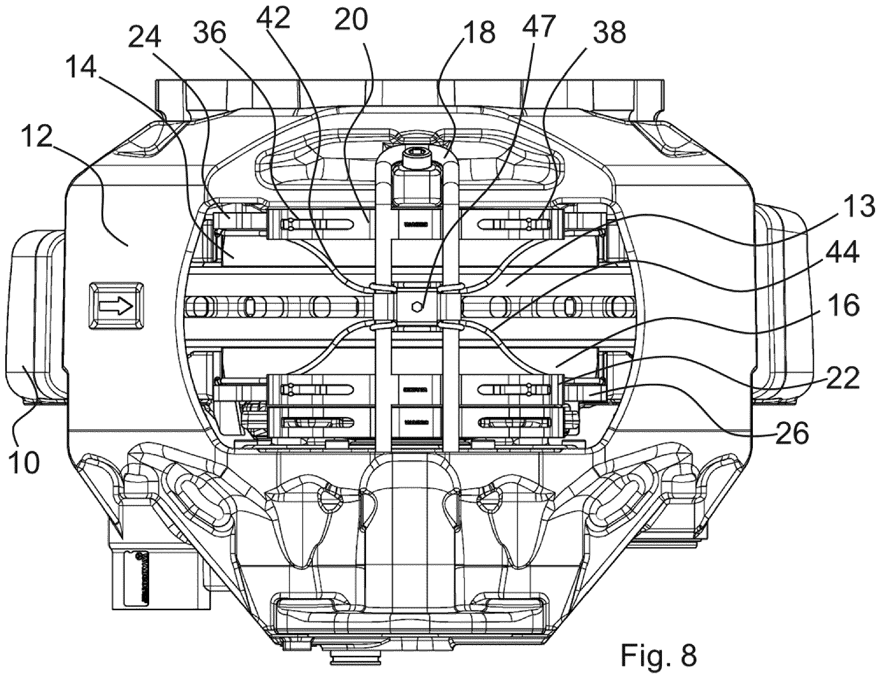

Die Figuren 7 und 8 zeigen ein viertes exemplarisches Ausführungsbeispiel. Bei diesem Ausführungsbeispiel gehören zu der Spreizeinrichtung zwei Federdrähte, die zusammen etwa die Kontur eines "X" haben. Sie sind mit den Bezugszahlen 42, 44 bezeichnet. Zur Halterung umschlingen sie jeweils mit einem Umlauf eine Speiche des Niederhaltebügels 18. An ihren Enden stützen sie sich jeweils an den Rückenplatten 24, 26 des ersten bzw. des zweiten Bremsbelags 14, 16 ab. In der Mitte stützen sie sich axial an einem gemeinsamen Widerlager 46 ab. In der Mitte des Widerlagers 46 befindet sich eine Schraube 47, die zum einen die Fixierung des Widerlagers 46 auf den Niederhaltebügel 18 bewirkt und zum anderen die Möglichkeit zum gezielten Einstellen der Federvorspannung auf den beiden Seiten der Bremsscheibe 13 bietet. Während die Federn 28, 30 auf Druck bzw. Stauchung beansprucht werden und so die elastische Rückstellkraft zur Spreizung erzeugen, handelt es sich bei den Federdrähten 42, 44 um eine Beanspruchung durch Biegen. Im Übrigen bewirken sie aber die gleiche Spreizung wie die Federn 28, 30.

Mit der Schraube 47 kann gezielt die Position des Widerlagers 46 eingestellt werden, das den Niederhaltebügel 18 umschließt. Dabei ist das Widerlager 46 reibschlüssig auf dem Niederhaltebügel 18 positioniert. Wird das Widerlager 46 außermittig positioniert und mit der Schraube 47 fixiert, stellen sich unterschiedliche Federvorspannungen auf der Zuspannseite einerseits und der Reaktionsseite andererseits ein. Es liegt also ein gezielt eingestelltes Kräfteungleichgewicht vor. Bei einer formschlüssigen Verbindung zwischen dem Widerlager 46 und dem Niederhaltebügel 18 wird wiederum ein Kräftegleichgewicht, also die gleiche Federvorspannung auf beiden Seiten erreicht, das allerdings durch die Verschiebung des Bremssattels 12 bei Belagverschleiß zu einem Kräfteungleichgewicht führt.

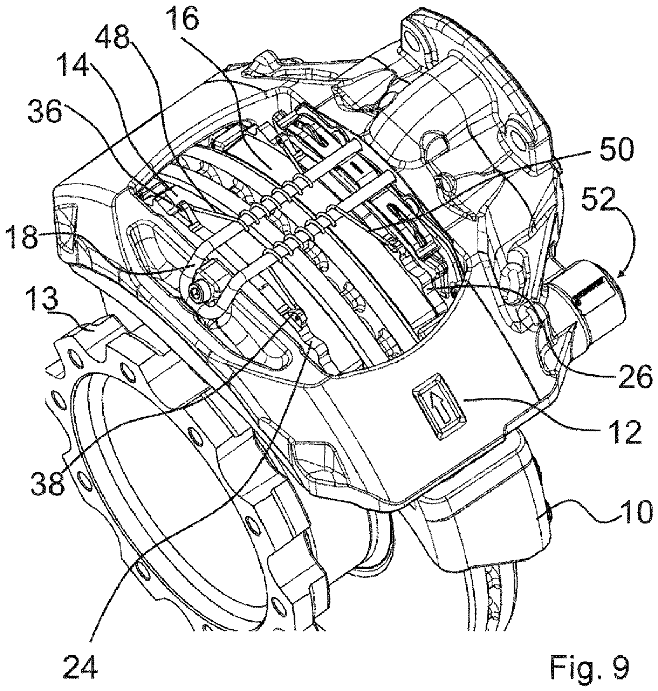

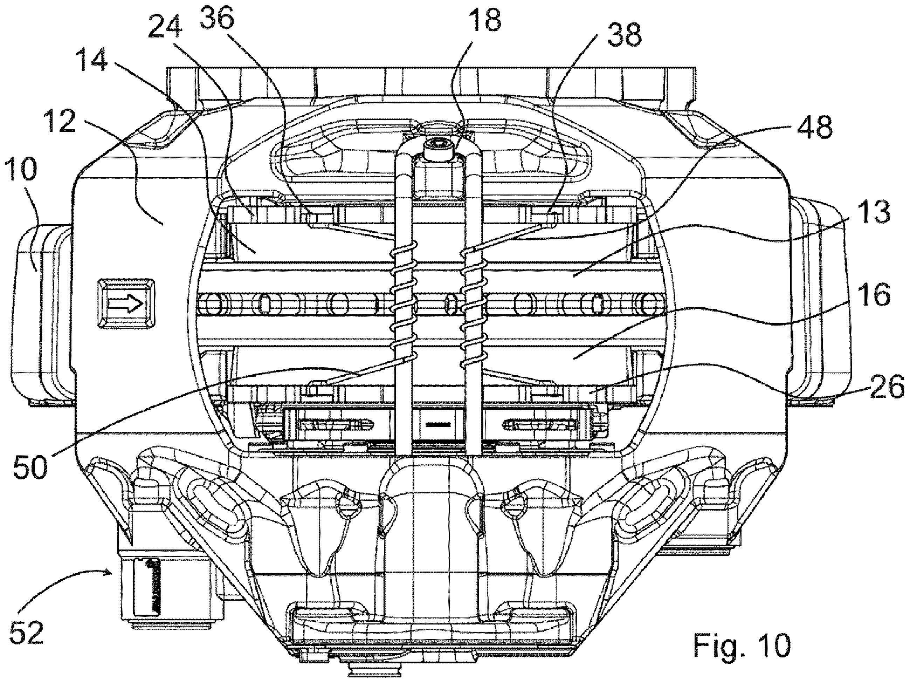

Bei dem in den Figuren 9 und 10 gezeigten fünften exemplarischen Ausführungsbeispiel werden die zur Spreizeinrichtung gehörenden Federn 48, 50 zur Erzeugung der der Spreizung dienenden Rückstellkraft teils auf Biegung und teils auf Druck beansprucht. Sie umschlingen die Speichen des Niederhaltebügels 18 mehrfach. An ihren Enden stützen sie sich an Ansätzen der Rückenplatten 24, 26 ab, von denen zwei mit den Bezugszahlen 36, 38 bezeichnet sind, vgl. auch Figur 1.

### BEZUGSZEICHENLISTE ALS TEIL DER BESCHREIBUNG

- 10: Bremsenträger
- 12: Bremssattel
- 13: Bremsscheibe
- 14: erster Bremsbelag
- 16: zweiter Bremsbelag
- 18: Niederhaltebügel
- 20: Niederhaltefeder des ersten Bremsbelags 14
- 22: Niederhaltefeder des zweiten Bremsbelags 16
- 24: Rückenplatte des ersten Bremsbelags 14
- 26: Rückenplatte des zweiten Bremsbelags 16
- 28: Feder
- 30: Feder
- 32: Blech
- 34: Blech
- 36: Ansatz
- 38: Ansatz
- 39: Halterung
- 40: Halterung
- 42: Federdraht
- 44: Federdraht
- 46: Widerlager
- 47: Schraube
- 48: Feder
- 50: Feder

## Patentansprüche

1. Scheibenbremse, insbesondere für Nutzfahrzeuge, mit
einer Bremsscheibe (13),
einem ersten Bremsbelag (14) auf einer ersten Seite der Bremsscheibe (13) und
einem zweiten Bremsbelag (16) auf einer der ersten Seite gegenüberliegenden zweiten Seite der Bremsscheibe (13),
wobei eine Spreizeinrichtung (28, 30), die eine den ersten und den zweiten Bremsbelag (14, 16) voneinander weg bewegende Kraft erzeugt, **dadurch gekennzeichnet, dass** die Spreizeinrichtung (28, 30) sich an einer Niederhaltefeder (20, 22) des ersten und des zweiten Bremsbelags (14, 16) abstützt, wobei
zu der Spreizeinrichtung zwei Federn (28, 30) gehören, die sich an zwei Blechen (32, 34) abstützen,
die Federn (28, 30) Schraubenfedern sind, die auf Druck beansprucht werden,
die Bleche (32, 34) L-förmig ausgeführt sind,
die Feder (30) zur Spreizung gegen das Blech (32) drückt, das seinerseits an der Niederhaltefeder (20) anliegt,
die Niederhaltefeder ihrerseits axial mit dem ersten Bremsbelag (14) über Ansätze (36, 38) gekoppelt ist, weshalb die Rückstellkraft der Federn (28, 30) axial auf den ersten Bremsbelag (14) wirkt, und
die Spreizeinrichtung (28,30) symmetrisch ausgeführt ist, so dass auch auf den zweiten Bremsbelag (16) die Rückstellkraft der Federn (28, 30) wirkt, wobei diese Rückstellkraft bewirkt, dass der erste Bremsbelag (14) und der zweite Bremsbelag (16) voneinander weg bewegt werden, wodurch sie von der Bremsscheibe abheben.

2. Scheibenbremse nach Anspruch 1, **dadurch gekennzeichnet, dass** die Spreizeinrichtung (28, 30; 42, 44; 48, 50) elastisch ist.

3. Scheibenbremse nach Anspruch 1 oder 2, **dadurch gekennzeichnet, dass** die
Spreizeinrichtung (42, 44) einen Federdraht aufweist.

4. Scheibenbremse nach einem der vorangehenden Ansprüche,
**dadurch gekennzeichnet, dass** die Spreizeinrichtung (28, 30; 42, 44; 48, 50) an einem Niederhaltebügel (18) des ersten und des zweiten Bremsbelags (14, 16) gehalten ist.

## Claims

1. Disk brake, in particular for utility vehicles, with
a brake disk (13),
a first brake lining (14) on a first side of the brake disk (13) and
a second brake lining (16) on a second side of the brake disk (13) opposite the first side,
wherein a spreading device (28, 30) which generates a force which moves the first and the second brake lining (14, 16) away from one another,
**characterized in that** the spreading device (28, 30) is supported on a retainer spring (20, 22) of the first and the second brake lining (14, 16), wherein
the spreading device includes two springs (28, 30) which are supported on two metal sheets (32, 34),
the springs (28, 30) are helical springs which are subjected to compressive loading,
the metal sheets (32, 34) are of L-shaped design,
the spring (30), for spreading, pushes against the metal sheet (32), which for its part bears against the retainer spring (20),
the retainer spring, for its part, is coupled axially to the first brake lining (14) via projections (36, 38), and for this reason the restoring force of the springs (28, 30) acts axially on the first brake lining (14), and
the spreading device (28, 30) is of symmetrical design, so that the restoring force of the springs (28, 30) also acts on the second brake lining (16), wherein said restoring force has the effect that the first brake lining (14) and the second brake lining (16) are moved away from one another, whereby they lift off from the brake disk.

2. Disk brake according to Claim 1, **characterized in that** the spreading device (28, 30; 42, 44; 48, 50) is elastic.

3. Disk brake according to Claim 1 or 2, **characterized in that** the spreading device (42, 44) has a spring wire.

4. Disk brake according to any one of the preceding claims, **characterized in that** the spreading device (28, 30; 42, 44; 48, 50) is retained on a retainer bracket (18) of the first and the second brake lining (14, 16).

## Revendications

1. Frein à disque, en particulier pour véhicules utilitaires, comprenant
un disque de frein (13),
une première garniture de frein (14) sur un premier côté du disque de frein (13), et
une deuxième garniture de frein (16) sur un deuxième côté du disque de frein (13), opposé au premier côté,
dans lequel un dispositif d'écartement (28, 30) qui génère une force éloignant la première et la deuxième garniture de frein (14, 16) l'une de l'autre,
**caractérisé en ce que** le dispositif d'écartement (28, 30) s'appuie sur un ressort de retenue (20, 22) de la première et de la deuxième garniture de frein (14, 16), dans lequel
deux ressorts (28, 30) font partie du dispositif d'écartement et s'appuient sur deux tôles (32, 34),
les ressorts (28, 30) sont des ressorts cylindriques qui sont mis sous pression,
les tôles (32, 34) sont réalisées en forme de L,
en vue de l'écartement, le ressort (30) appuie sur la tôle (32) qui est à son tour adjacente au ressort de retenue (20),
le ressort de retenue est à son tour couplé axialement à la première garniture de frein (14) par l'intermédiaire d'épaulements (36, 38), raison pour laquelle la force de rappel des ressorts (28, 30) agit axialement sur la première garniture de frein (14), et
le dispositif d'écartement (28, 30) est réalisé de manière symétrique de sorte que la force de rappel des ressorts (28, 30) agit aussi sur la deuxième garniture de frein (16), ladite force de rappel ayant pour effet que la première garniture de frein (14) et la deuxième garniture de frein (16) sont éloignées l'une de l'autre de façon à se soulever du disque de frein.

2. Frein à disque selon la revendication 1, **caractérisé en ce que** le dispositif d'écartement (28, 30 ; 42, 44 ; 48, 50) est élastique.

3. Frein à disque selon la revendication 1 ou 2, **caractérisé en ce que** le dispositif d'écartement (42, 44) présente un fil d'acier pour ressort.

4. Frein à disque selon l'une quelconque des revendications précédentes, **caractérisé en ce que** le dispositif d'écartement (28, 30 ; 42, 44 ; 48, 50) est maintenu au niveau d'un étrier de retenue (18) de la première et de la deuxième garniture de frein (14, 16).
